# EUROPÄISCHE PATENTANMELDUNG

(11) **EP 2 545 757 A1**
(43) Veröffentlichungstag der Anmeldung: **16.01.2013**
(21) Anmeldenummer: 12005106.5
(22) Anmeldetag: 10.07.2012
(51) Int. Cl.: A01B 33/10

(54) **Kreiseleggenzinken**

(30) Priorität: 12.07.2011 DE 102011051751
(71) Anmelder: Betek GmbH & Co. KG, 78733 Aichhalden (DE)
(72) Erfinder: Smeets, Florian, 72270 Baiersbronn (DE); Widmaier, Helmut, 78733 Aichhalden-Rötenberg (DE); Krämer, Ulrich, 77709 Wolfach (DE)
(74) Vertreter: Fleck, Hermann-Josef

(57) **Zusammenfassung**

Die Erfindung betrifft einen Kreiseleggenziriken mit einem Zinkenkörper, der an einem Schneidkopf eine Schneide aufweist.

Um eine Kreiseleggenzinke der eingangs erwähnten Art zu schaffen, die einfach wechselbar und verschleißoptimiert ausgelegt ist, ist es vorgesehen, dass an den Schneidkopf mittelbar oder unmittelbar ein Befestigungsabschnitt zur Ankopplung an einen Wechselhalter angeformt ist.

## Beschreibung

Die Erfindung betrifft einen Kreiseleggenzinken mit einem Zinkenkörper, der an einem Schneidkopf eine Schneide aufweist.

Kreiseleggen werden im Ackerbau zur Auflockerung des Ackerbodens eingesetzt. Dabei weisen die Kreiseleggen gegenläufig drehende Rotoren auf, an denen nach unten abstehende Kreiseleggenzinken montiert sind. Die Rotationsachse steht im Wesentlichen senkrecht, sodass die Kreiseleggenzinken über einen Koppelkörper an den Rotor angeschlossen sind. Der Koppelkörper trägt einen nach unten abstehenden Zinkenkörper, der endseitig mit einer Schneide ausgerüstet ist. Während des Betriebseinsatzes rotieren die Kreiseleggenzinken und schneiden dabei durch den Boden. Sie sind dementsprechend einem hohen Verschleiß ausgesetzt. Abhängig von dem bearbeiteten Untergrund variiert die Standzeit der Kreiseleggenzinken. Beispielsweise ist bei stark sandhaltigen Böden eine höhere Abrasion zu erwarten, sodass entsprechend die Lebensdauer der Kreiseleggenzinken herabgesetzt ist.

Nachdem die Kreiseleggenzinken verschlissen sind, müssen sie ausgetauscht werden. Dazu ist es erforderlich, die zwischen dem Rotor und den Zinkenkörpem gebildete Schraubverbindung zu lösen und einen neuen, unverschlissenen Kreiseleggenzinken anzubauen. Dies gestaltet sich aufgrund der eingeschränkten Zugänglichkeit zum Rotor nicht immer einfach.

Eine solche Kreiseleggenzinke ist in der EP 0 938 256 B1 beschrieben.

Es ist Aufgabe der Erfindung, eine Kreiseleggenzinke der eingangs erwähnten Art zu schaffen, die einfach wechselbar und verschleißoptimiert ausgelegt ist.

Diese Aufgabe wird dadurch gelöst, dass an den Schneidkopf mittelbar oder unmittelbar ein Befestigungsabschnitt zur Ankopplung an einen Wechselhalter angeformt ist.

Gegenüber dem Stand der Technik wird somit ein Werkzeugsystem vorgeschlagen, bei dem ein Kreiseleggenzinken zum Einsatz kommt, der auswechselbar an einem Wechselhalter befestigbar ist. Der Wechselhalter kann fest mit dem Rotor verbunden werden, wobei auch auf die gängigen Befestigungssysteme, beispielsweise Schraubverbindungs- oder Schnellwechselsysteme, zurückgegriffen werden kann. An diesem Wechselhalter kann der Kreiseleggenzinken nun einfach zugänglich auswechselbar befestigt werden. Der Kreiseleggenzinken ermöglicht auch eine verschleißoptimierte Auslegung des Werkzeugsystems. Dementsprechend wird der Zinkenkörper, der mit seiner Schneide dem abrasiven Angriff ausgesetzt ist, als Verschleißteil ausgelegt, und kann nach Erreichen der Verschleißgrenze ausgetauscht werden.

Dem gegenüber kann der Wechselhafter am Rotor der Kreiselegge montiert bleiben. Es ist mithin eine materialoptimierte Auslegung durch die Trennung in einen Kreiseleggenzinken und einen Wechselhalter geschaffen worden.

Gemäß einer bevorzugten Ausgestaltungsvariante der Erfindung kann es vorgesehen sein, dass der Zinkenkörper zusammen mit dem Befestigungsabschnitt einen gestreckten Werkzeugkörper bildet. Ein solcher Kreiseleggenzinken lässt sich zum einen einfach fertigen, zum anderen ist er mit seinem Befestigungsabschnitt leicht von der Unterseite der Kreiselegge her in den Wechselhalter zu montieren. Darüber hinaus ist der Kreiseleggenzinken auch verschleißoptimiert ausgelegt, denn er erstreckt sich nur in dem nach unten vorstehenden Zinkenbereich, der dem Verschleiß ausgesetzt ist, und er ist somit von dem horizontalen und im Winkel stehenden Koppelkörper getrennt.

Eine besonders effektive Ableitung der Bearbeitungskräfte wird dann möglich, wenn vorgesehen ist, dass der Befestigungsabschnitt Stützflächen aufweist, die in Richtung der Längserstreckung des Schneidkopfes verlaufen.

Eine weiter verbesserte Kraftableitung wird auf einfache Weise dadurch erreicht, dass dem Befestigungsabschnitt ein Übergangsabschnitt zugeordnet ist, der mit in Vorschubrichtung verlaufenden Tragflächen ausgestattet ist.

Eine besonders verschleißresistent ausgelegte Gestaltung ergibt sich dann für den Kreiseleggenzinken, wenn vorgesehen ist, dass der Schneidkopf einen in Vorschubrichtung vorderen Schneidelement-Träger aufweist, an dem Schneidelemente bestehend aus Hartwerkstoff, insbesondere aus Hartmetall, befestigt sind.

Eine Erfindungsvariante kann dergestalt sein, dass der Schneidkopf mittels des Übergangsabschnittes an dem Befestigungsabschnitt befestigt ist, und dass der Übergangsabschnitt quer zur Vorschubrichtung eine größere Breite als der Schneidkopf aufweist. Mit dieser Ausführung können hohe Querkräfte abgeleitet werden, wobei der Kreiseleggenzinken dabei materialoptimiert ausgelegt ist.

Hierbei kann es insbesondere vorgesehen sein, dass der Übergangsabschnitt Ableitflächen aufweist, die geneigt zur Vorschubrichtung verlaufend den Querschnitt des Übergangsabschnittes verjüngen. Diese Gestaltung verringert den Eindringwiderstand des Kreiseleggenzinkens zugunsten einer geringeren erforderlichen Maschinenantriebsleistung.

Besonders bevorzugt ist es vorgesehen, dass der Befestigungsabschnitt einen Steckansatz bildet. Er kann damit auch bei schwer zugänglichen Montagesituationen einfach montiert werden.

Gemäß einer weiteren Erfindungsgestaltung kann es vorgesehen sein, dass der Befestigungsabschnitt an bevorzugt gegenüberliegenden Seiten Längsführungen bildet, die im Wesentlichen in Richtung der Längserstreckung des Befestigungsabschnittes verlaufen. Diese Längsführungen unterstützen ebenfalls die leichte Montierbarkeit. Darüber hinaus bilden sie eine Nachsetzführung. Wenn während des Betriebseinsatzes der Wechselhalter an dem der Kreiseleggenzinken montiert ist, sich ein wenig an den Stützflächen abnutzt, so bleibt die zuverlässige Befestigung aufrechterhalten, denn der Kreiseleggenzinken kann sich an seinen Längsführungen in den Wechselhalter nachsetzen. Auch kann der Wechselhalter dann noch zur Aufnahme weiterer unverschlissener Kreiseleggenzinken verwendet werden.

Eine einfache Befestigung des Kreiseleggenzinkens wird dann möglich, wenn der Befestigungsabschnitt mit einer Befestigungsausnehmung versehen ist. Vorzugsweise ist dabei der Befestigungsabschnitt an der dem schneidenseitigen Ende abgewandten Seite des Zinkenkörpers angeordnet, um ihn möglichst vor Verschleiß zu schützen.

Es hat sich gezeigt, dass eine materialoptimiert ideale Abstützung dadurch erreicht wird, dass das Verhältnis Schneidkopflänge/Befestigungsabschnittlänge im Bereich zwischen 1 und 10 liegt.

Weiterhin sollte das das Verhältnis Befestigungsabschnittlänge/Befestigungsabschnittbreite im Bereich zwischen 1 und 5 liegen, um die unterschiedlichen, durch verschiedene Bodenarten bewirkten, Bearbeitungskräfte sicher abfangen zu können.

Gegenstand der Erfindung ist auch eine Werkzeugkombination bestehend aus einem Kreiseleggenzinken mit einem Zinkenkörper, der an einem Schneidkopf eine Schneide aufweist, wobei der Zinkenkörper mit einem Wechselhalter lösbar verbindbar ist. Die Vorteile einer solchen Werkzeugkombination sind vorstehend erläutert.

Insbesondere kann es vorgesehen sein, dass zwischen dem Zinkenkörper und dem Wechselhalter eine Steckverbindung bestehend aus Steckansatz und Steckaufnahme wirksam ist, um eine leichte Montage beziehungsweise Demontage des Kreiseleggenzinkens sicherzustellen.

Der Wechselhalter sollte bevorzugt einen Koppelkörper und ein dazu im Winkel angeordnetes Aufnahmeteil aufweisen. Dabei ist das Aufnahmeteil zur Verbindung mit dem Zinkenkörper ausgestattet. Mithin ist also der Zinkenkörper im Bereich des höchsten Verschleißes angeordnet, und der Wechselhalter ist verschleißoptimiert so ausgelegt, dass er die Bereiche bildet, die wenig oder gar nicht mit dem Boden in Berührung kommen.

Eine besonders bevorzugte Erfindungsvariante ist derart, dass der Befestigungsabschnitt symmetrisch ausgebildet ist, um eine Montage des Zinkenkörpers in zwei gegeneinander verdrehten Stellungen zu ermöglichen. Dementsprechend kann also der Kreiseleggenzinken dann in üblicherweise "schleppend" mit nach unten geneigter Schneide montiert werden, oder er lässt sich "auf Griff" montieren, sodass ein Kreiselgrubber gebildet ist.

Die Erfindung wird im Folgenden anhand eines in den Zeichnungen dargestellten Ausführungsbeispieles näher erläutert. Es zeigen:
- Figur 1: eine Werkzeugkombination bestehend aus einem Kreiseleggenzinken und einem Werkzeughalter in perspektivischer Seitenansicht;
- Figur 2: den Wechselhalter gemäß Figur 1 in perspektivischer Ansicht von unten;
- Figur 3: den Wechselhalter gemäß Figur 2 in perspektivischer Ansicht von oben;
- Figur 4: den Kreiseleggenzinken gemäß Figur 1 in perspektivischer Außenansicht; und
- Figur 5: den Kreiseleggenzinken gemäß Figur 4 in perspektivischer Innenansicht.

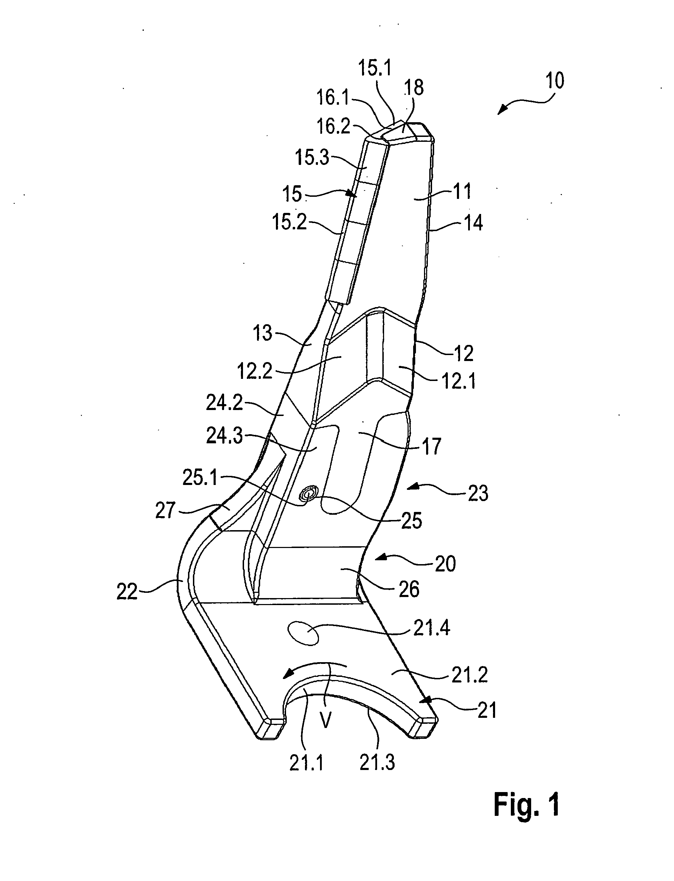

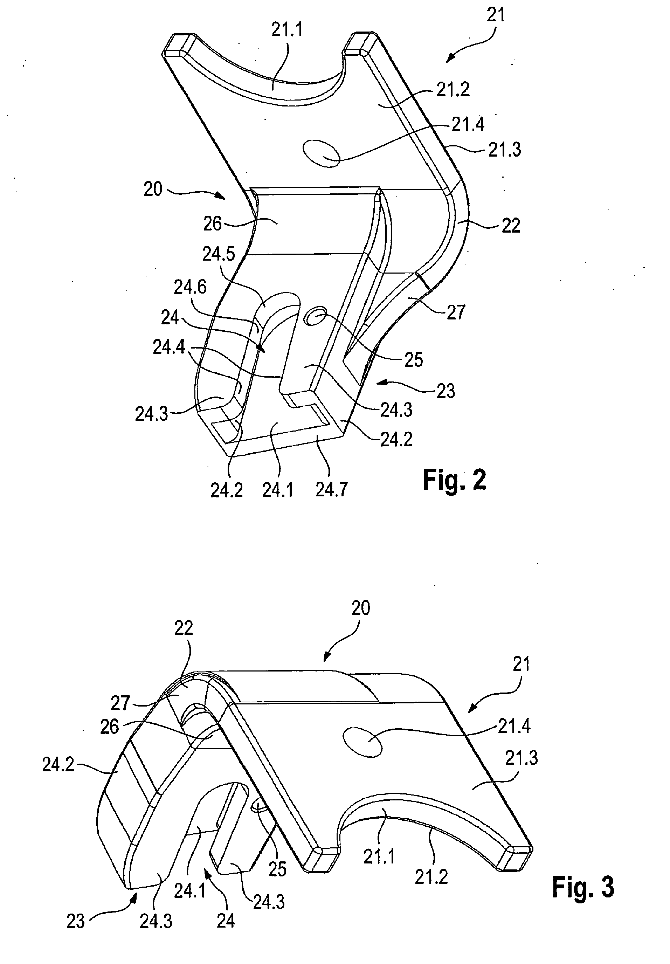

Figur 1 zeigt eine Werkzeugkombination bestehend aus einem Kreiseleggenzinken mit einem Zinkenkörper 10, der auswechselbar an einem Wechselhalter 20 befestigt ist. Die Gestaltung des Wechselhalters 20 lässt sich näher den Figuren 2 und 3 entnehmen.

Wie diese Darstellungen zeigen, weist der Wechselhalter 20 einen plattenförmigen Koppelkörper 21 auf, der mit einem Zentrierabschnitt 21.1 zu sehen ist. Der Zentrierabschnitt 21.1 ist in Form einer konkaven Einmuldung ausgebildet, und in seiner Geometrie an eine Montagefläche eines nicht dargestellten Rotorkörpers angepasst. Als alternative Befestigungsformen sind auch anders gestaltete Schnellwechselsysteme denkbar. Der Koppelkörper 21 ist von einer Bohrung 21.4 durchdrungen. Durch diese Bohrung 21.4 kann ein Schraubelement hindurchgeführt und in den Rotor zur Fixierung des Wechselhalters 20 eingeschraubt werden. Auf diese Weise kann der Wechselhalter 20 auswechselbar mit dem Rotor der Kreiseleggenzinke verbunden werden.

An den Koppelkörper 21 ist über eine Abwinklung 22 einteilig ein Aufnahmeteil 23 angeschlossen. Dabei ist das Aufnahmeteil 23 in seinem Querschnitt gleich oder breiter ausgebildet als der Koppelkörper 21. Der Aufnahmeteil 23 ist mittels einer Aussteifung 26 kontinuierlich in die Abwinklung 22 und den Koppelkörper 21 übergeleitet, sodass Spannungsspitzen abgebaut werden können. Die Vorschubrichtung V ist in Figur 1 markiert. In Vorschubrichtung V vor und hinter dem Aufnahmeteil 23 sind die Übergangsabschnitte 27 als Stützabschnitte angeformt, die das Aufnahmeteil 23 in die Abwinklung 22 aussteifend überleiten.

Das Aufnahmeteil 23 ist mit einer Steckaufnahme 24 ausgerüstet, die in Form einer Tasche stirnseitig in das Aufnahmeteil 23 eingearbeitet ist. Die Steckaufnahme 24 wird von einer in Vorschubrichtung V verlaufenden Stützwand 24.1 und zwei dazu im rechten Winkel stehenden Führungswänden 24.2 begrenzt. Parallel zu der Stützwand 24.1 sind zwei gegenüberliegende Stege 24.3 vorgesehen, die ebenfalls die Steckaufnahme 24 begrenzen. Die Steckaufnahme 24 ist zwischen den Stegen 24.3 mittels eines Durchbruches 24.5 zur Umgebung hin geöffnet. Der Durchbruch 24.5 wird von den Stegflächen 24.6 begrenzt. In die Steckaufnahme 24 mündet eine als Bohrung ausgebildete Befestigungsaufnahme 25. Diese durchdringt sowohl den einen Steg 24.3 als auch die Stützwand 24.1.

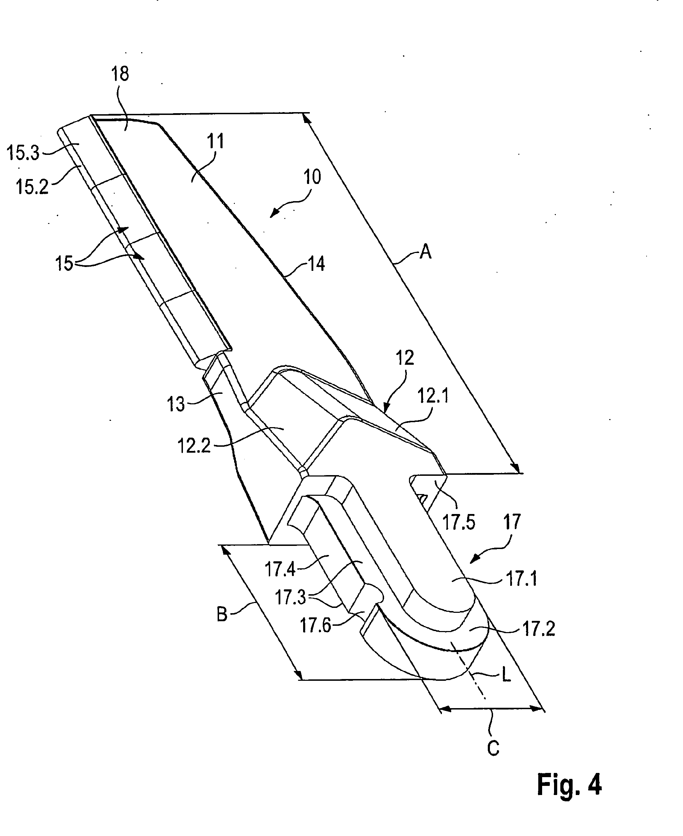

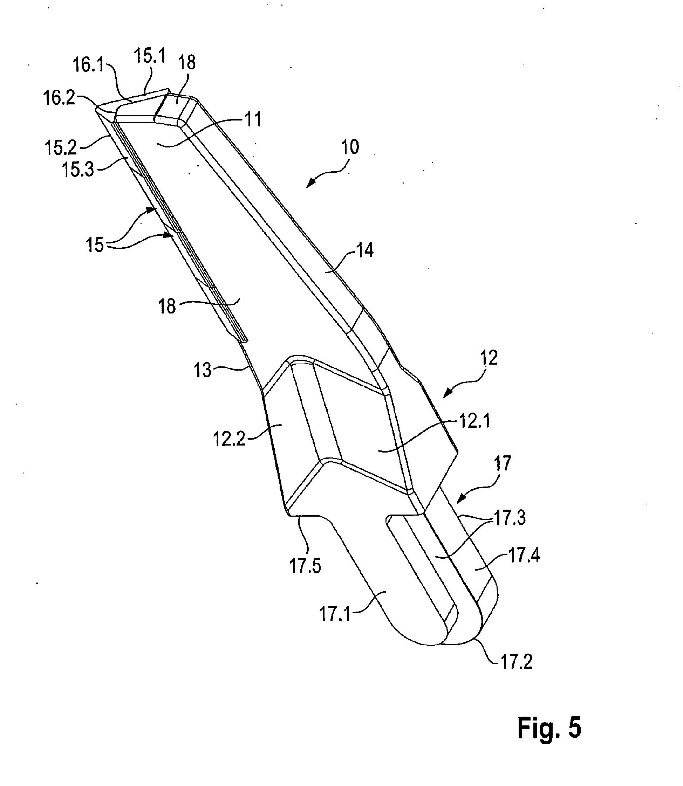

In den Figuren 4 und 5 ist ein Kreiseleggenzinken mit einem Zinkenkörper 10 gezeigt. Der Zinkenkörper 10 weist einen Schneidkopf 11 auf, der frontseitig mit einem Schneidelementträger 18 ausgerüstet ist. Dabei ist der Schneidelementträger 18 einteilig an den Schneidkopf 11 angeformt, und im Querschnitt V-förmig ausgebildet. Er weist, wie dies insbesondere Figur 5 erkennen lässt, eine ebene Anlagefläche 16.1 auf, die in eine winklig dazu angeordnete Stützfläche 16.2 übergeht. Die Anlagefläche 16.1 und die Stützfläche 16.2 bilden einen Aufnahmebereich für Schneidelemente 15. Die Schneidelemente 15 bestehen aus einem im Querschnitt in etwa dreieckförmigen Stützkörper 15.3, an den einteilig ein Ansatz 15.1 angeformt ist. Der Stützkörper 15.3 bildet eine gerundete Schneide 15.2. Mit dem Ansatz 15.1 ist das Schneidelement 15 auf die Anlagefläche 16.1 aufgelegt, und der Stützkörper 15.3 stützt sich auf der Stützfläche 16.2 ab. Zur Fixierung der Schneidelemente 15 wird eine Löt- oder eine Klebverbindung oder sonstige stoffschlüssige Verbindung zwischen der Anlagefläche 16.1 und dem Ansatz 15.1 sowie der Stützfläche 16.2 und dem Stützkörper 15.3 verwendet.

Wie aus den Zeichnungen ersichtlich ist, werden mehrere Schneidelemente 15 aneinander gereiht. Dies hat den Vorteil, dass die Bruchgefahr reduziert ist, da nicht ein durchgängiges Schneidelement 15 verwendet ist. Die dreieckförmige Ausbildung des Stützkörpers 15.3 ist verschleißoptimiert, denn in diesem stark belasteten Bereich steht viel Hartmetallmaterial zur Verfügung, das sich kontinuierlich abnutzen kann. Der Ansatz 15.1 schützt den Schneidkopf 11 vor dem vorbeifließenden abrasiven Bodenmaterial. Hierdurch wird eine weiter verschleißoptimierte Auslegung erreicht.

Der Schneidelementträger 18 schließt mit einer Rückseite 14 ab. Frontseitig ist unterhalb der Schneidelemente 15 eine ebene Frontseite 13 gebildet. Die Rückseite 14 und die Frontseite 13 gehen in entsprechende Flächen eines Übergangsabschnittes 12 bündig über. Der Übergangsabschnitt 12 ist in seiner quer zur Vorschubrichtung V verlaufenden Breite massiver ausgebildet, als der Schneidelementträger 18. Damit ist er hier im Bereich einer hohen Biegebeanspruchung festigkeitsoptimiert ausgelegt.

Der Übergangsabschnitt 12 trägt einen Befestigungsabschnitt 17 mit einem Steckansatz 17.1. Der Steckansatz 17.1 schließt an seinem freien Ende mit einem gerundeten (oder winkeligen) Endabschnitt 17.2 ab. Wie Figur 4 erkennen lässt, ist der Steckansatz 17.1 in Vorschubrichtung V vorne und hinten jeweils mit paarweise parallelen Stützflächen 17.3 ausgerüstet. Diese Stützflächen 17.3 bilden zusammen mit einer vertikal zu den Stützflächen 17.3 stehenden Stützfläche 17.4 Längsführungen. Denkbar ist auch die Verwendung paarweise zueinander winklig angestellter Stützflächen, sodass sich konische oder prismenförmige Längsführungen ergeben. Zwischen den beiden Längsführungen ist der Steckansatz 17.1 mittels einer Verdickung auf den anschließenden Querschnitt des Übergangsabschnittes 12 angepasst. Der Übergangsabschnitt 12 geht über Rundungsübergänge in den Steckansatz 17.1 über. Weiterhin ist der Übergangsabschnitt 12 als Schürze ausgebildet, die mit einer nach unten weisenden Tragfläche 17.5 ausgerüstet ist. Im Bereich der in Vorschubrichtung V vorderen, von den Stützflächen 17.3 gebildeten Führung, ist eine Ausnehmung 17.6 mit teilkreisförmigem Querschnitt vorgesehen. Der Befestigungsabschnitt 17 ist auf die Geometrie der Steckaufnahme 24 des Wechselhalters 20 angepasst ausgelegt, sodass er darin montiert werden kann. Selbstverständlich kann sich im Rahmen der Erfindung umgekehrt auch der Befestigungsabschnitt 17 mit seinem Steckansatz an dem Wechselhalter 20 und die Steckaufnahme an dem Zinkenkörper 10 befinden.

Zur Montage des Kreiseleggenzinkens gemäß Figuren 4 und 5 wird der Steckansatz 17.1 in die Steckaufnahme 24 des Wechselhalters 20 eingeschoben. Dabei gleiten die Stützflächen 17.3 an der Innenseite der Stützwand 24.1, den Führungswänden 24.2 und den Stegen 24.3 entlang. Die Einsetzbewegung wird durch die Tragfläche 17.5 begrenzt. Diese schlägt an der Gegenfläche 24.7 des Wechselhalters 20 an. Dementsprechend steht der Endabschnitt 17.2 in geringem Abstand zu der bodenseitigen Begrenzung der Steckaufnahme 24 und bildet so einen Nachsetzbereich.

Zur Fixierung des Zinkenkörpers 10 ist ein zylindrischer Spannstift 25.1 oder eine Schraubverbindung (oder ähnliche Verbindungsvarianten) verwendet, wie dies Figur 1 erkennen lässt. Dieser wird durch die Befestigungsaufnahme 25 hindurch getrieben und durchfässt die Ausnehmung 17.6 im Steckansatz 17.1. Zum Austausch des Zinkenkörpers 10 muss lediglich der Spannstift 25.1 wieder ausgetrieben werden, und der Zinkenkörper 10 kann dann aus dem Wechselhalter 20 herausgezogen werden. Während des Betriebseinsatzes wirken die Bearbeitungskräfte auf die Schneidelemente 15. Diese Bearbeitungskräfte werden dann über den Schneidkopf 11 und den Übergangsabschnitt 12 in den Steckansatz 17.1 abgeleitet. Dabei werden die Bearbeitungskräfte über die Tragflächen 17.5 und die Führungsflächen 17.3 und 17.4 in den Wechselhalter 20 abgetragen.

## Patentansprüche

1. Kreiseleggenzinken mit einem Zinkenkörper (10), der an einem Schneidkopf (11) eine Schneide (15.2) aufweist,
**dadurch gekennzeichnet,**
**dass** an den Schneidkopf (11) mittelbar oder unmittelbar ein Befestigungsabschnitt (17) zur Ankopplung an einen Wechselhalter (20) angeformt ist.

2. Kreiseleggenzinken nach Anspruch 1,
**dadurch gekennzeichnet,**
**dass** der Zinkenkörper (10) zusammen mit dem Befestigungsabschnitt (17) einen gestreckten Werkzeugkörper bildet.

3. Kreiseleggenzinken nach Anspruch 1 oder 2,
**dadurch gekennzeichnet,**
**dass** der Befestigungsabschnitt (17) Stützflächen (17.4) aufweist, die in Richtung der Längserstreckung (L) des Schneidkopfes (11) verlaufen.

4. Kreiseleggenzinken nach einem der Ansprüche 1 bis 3,
**dadurch gekennzeichnet,**
**dass** dem Befestigungsabschnitt (17) ein Übergangsabschnitt (12) zugeordnet ist, der mit in Vorschubrichtung (V) verlaufenden Tragflächen (17.5) ausgestattet ist.

5. Kreiseleggenzinken nach einem der Ansprüche 1 bis 4,
**dadurch gekennzeichnet,**
**dass** der Schneidkopf (11) einen in Vorschubrichtung (V) vorderen Schneidelement-Träger (18) aufweist, an dem Schneidelemente (15) bestehend aus Hartwerkstoff, insbesondere aus Hartmetall, befestigt sind.

6. Kreiseleggenzinken nach einem der Ansprüche 1 bis 5,
**dadurch gekennzeichnet,**
**dass** der Schneidkopf (11) mittels des Übergangsabschnittes (12) an dem Befestigungsabschnitt (17) befestigt ist, und
**dass** der Übergangsabschnitt (12) quer zur Vorschubrichtung (V) eine größere Breite als der Schneidkopf (11) aufweist.

7. Kreiseleggenzinken nach Anspruch 5,
**dadurch gekennzeichnet,**
**dass** der Übergangsabschnitt (12) Ableitflächen aufweist, die geneigt zur Vorschubrichtung (V) verlaufend den Querschnitt des Übergangsabschnittes (12) verjüngen.

8. Kreiseleggenzinken nach einem der Ansprüche 1 bis 7,
**dadurch gekennzeichnet,**
**dass** Befestigungsabschnitt (17) einen Steckansatz bildet.

9. Kreiseleggenzinken nach einem der Ansprüche 1 bis 8,
**dadurch gekennzeichnet,**
**dass** der Befestigungsabschnitt (17) an bevorzugt gegenüberliegenden Seiten Längsführungen bildet, die im Wesentlichen in Richtung der Längserstreckung des Befestigungsabschnittes (17) verlaufen.

10. Kreiseleggenzinken nach einem der Ansprüche 1 bis 9,
**dadurch gekennzeichnet,**
**dass** der Befestigungsabschnitt (17) mit einer Befestigungsausnehmung (17.6) versehen ist.

11. Kreiseleggenzinken nach einem der Ansprüche 1 bis 10,
**dadurch gekennzeichnet,**
**dass** das Verhältnis Schneidkopflänge (A)/Befestigungsabschnittlänge (B) im Bereich zwischen 1 und 10 liegt.

12. Kreiseleggenzinken nach einem der Ansprüche 1 bis 11,
**dadurch gekennzeichnet,**
**dass** das Verhältnis Befestigungsabschnittlänge (B)/Befestigungsabschnittbreite (C) im Bereich zwischen 1 und 5 liegt.

13. Kreiseleggenzinken nach einem der Ansprüche 1 bis 12,
**dadurch gekennzeichnet,**
**dass** der Befestigungsabschnitt (17) symmetrisch ausgebildet ist, um eine Montage des Zinkenkörpers (10) in zwei gegeneinander verdrehten Stellungen zu ermöglichen.

14. Werkzeugkombination bestehend aus einem Kreiseleggenzinken mit einem Zinkenkörper (10), der an einem Schneidkopf eine Schneide aufweist,
**dadurch gekennzeichnet,**
**dass** der Zinkenkörper (10) mit einem Wechselhalter (20) lösbar verbindbar ist.

15. Werkzeugkombination nach Anspruch 14,
**dadurch gekennzeichnet,**
**dass** zwischen dem Zinkenkörper (10) und dem Wechselhalter (20) eine Steckverbindung bestehend aus Steckansatz (17.1) und Steckaufnahme (24) wirksam ist.

16. Werkzeugkombination nach Anspruch 14 oder 15,
**dadurch gekennzeichnet,**
**dass** der Wechselhalter (20) einen Koppelkörper (21) und ein dazu im Winkel angeordnetes Aufnahmeteil (23) aufweist, und
**dass** das Aufnahmeteil (23) zur Verbindung mit dem Zinkenkörper (10) ausgestattet ist.
